(19) Europäisches Patentamt
European Patent Office
Office européen des brevets

(11) **EP 4 586 722 A1**

(12) **EUROPEAN PATENT APPLICATION**
published in accordance with Art. 153(4) EPC

(43) Date of publication:
**16.07.2025 Bulletin 2025/29**

(21) Application number: **23870524.8**

(22) Date of filing: **20.09.2023**

(51) International Patent Classification (IPC):
***H04W 72/232*** *(2023.01)*

(52) Cooperative Patent Classification (CPC):
**H04W 72/0457; H04W 72/232**

(86) International application number:
**PCT/CN2023/120044**

(87) International publication number:
**WO 2024/067292 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211230567**

(71) Applicant: **Huawei Technologies Co., Ltd.**
**Shenzhen, Guangdong 518129 (CN)**

(72) Inventors:
• **HUA, Meng**
**Shenzhen, Guangdong 518129 (CN)**
• **PENG, Jinlin**
**Shenzhen, Guangdong 518129 (CN)**
• **WANG, Yi**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND APPARATUS FOR TRANSMITTING DOWNLINK CONTROL INFORMATION**

(57) This application provides a downlink control information transmission method and an apparatus. The method includes: A terminal determines a quantity of information bits of first downlink control information DCI based on a 1st corresponding non-dormant bandwidth part BWP of a secondary cell SCell within active time or a 1st corresponding non-dormant BWP of a secondary cell outside active time, and monitors the first DCI on a PDCCH candidate of a primary cell PCell based on the quantity of information bits of the first DCI. The first DCI is used to schedule data transmission of the PCell and/or data transmission of the SCell. The solutions disclosed in this application help accurately determine a size of DCI, and improve information transmission performance.

400

```
Network                                          Terminal
device                                           device
  |                                                 |
  |        S410: Determine a quantity of            |
  |        information bits of first                |
  |        DCI based on a first BWP of a first      |
  |        cell, where the first                    |
  |        DCI is carried on a PDCCH candidate      |
  |        in a second cell,                        |
  |        and the first DCI is used to schedule    |
  |        data transmission of a                   |
  |        third cell                               |
  |                                                 |
  |   S420: Monitor the first DCI on the PDCCH candidate in the second
  |   cell based on the quantity of information bits of the first DCI →
  |                                                 |
```

FIG. 4

**Description**

This application claims priority to Chinese Patent Application No. 202211230567.9, filed with the China National Intellectual Property Administration on September 30, 2022 and entitled "DOWNLINK CONTROL INFORMATION TRANSMISSION METHOD AND APPARATUS", which is incorporated herein by reference in its entirety.

**TECHNICAL FIELD**

This application relates to the wireless communication field, and more specifically, to a downlink control information transmission method and an apparatus.

**BACKGROUND**

With development of communication technologies, a feature that two cells schedule one cell is introduced in a new radio (new radio, NR) communication system. To be specific, both a primary cell (primary cell, PCell) and a secondary cell (secondary cell, SCell) may send downlink control information (downlink control information, DCI) through a physical downlink control channel (physical downlink control channel, PDCCH), to schedule data transmission of the PCell. Usually, for a specific DCI format, a size of DCI for scheduling data transmission of a PCell in the PCell needs to be aligned with a size of DCI for scheduling data transmission of the PCell in an SCell.

Therefore, when the SCell is deactivated or an active downlink (downlink, DL) bandwidth part (bandwidth part, BWP) of the SCell is a dormant DL BWP, although a PDCCH for scheduling the data transmission of the PCell is not sent in the SCell, the size of the DCI for scheduling the data transmission of the PCell in the SCell still needs to be determined, to determine the size of the DCI for scheduling the data transmission of the PCell in the PCell.

Therefore, a method is urgently needed to accurately determine the size of the DCI for scheduling the data transmission of the primary cell in the primary cell, and improve information transmission performance.

**SUMMARY**

This application provides a downlink control information transmission method and an apparatus, to help accurately determine a size of DCI and improve information transmission performance.

According to a first aspect, a downlink control information transmission method is provided. The method is performed by a terminal device, and includes: determining a quantity of information bits of first downlink control information DCI based on a first bandwidth part BWP of a first cell, where the first BWP is a 1st corresponding non-dormant BWP within active time or a 1st corresponding non-dormant BWP outside active time, the first DCI is carried on a physical downlink control channel PDCCH candidate in a second cell, the first DCI is used to schedule data transmission of a third cell, the first cell is a secondary cell of the terminal device, the second cell is a primary cell or a secondary cell of the terminal device, and the first cell is different from the second cell; and monitoring the first DCI on the PDCCH candidate in the second cell based on the quantity of information bits of the first DCI.

According to the solution disclosed in this application, when the primary cell (the second cell) and the secondary cell (the first cell) schedule data transmission of the primary cell, and the secondary cell is deactivated or an active BWP of the secondary cell is a dormant BWP, a rule for determining a size of DCI for scheduling data transmission of the primary cell in the primary cell is re-made. This helps accurately determine the size of the DCI, and improve information transmission performance.

With reference to the first aspect, in some implementations of the first aspect, before the monitoring the first DCI, the method further includes: receiving second DCI; and switching an active downlink BWP of the first cell to a dormant BWP based on the second DCI, where when the second DCI is received within active time, the first BWP is the 1st corresponding non-dormant BWP within active time; or when the second DCI is received outside active time, the first BWP is the 1st corresponding non-dormant BWP outside active time.

With reference to the first aspect, in some other implementations of the first aspect, before the monitoring the first DCI, the method further includes: receiving second DCI; and switching an active downlink BWP of the first cell to a dormant BWP based on the second DCI, where when a format of the second DCI is DCI format 0_1 or DCI format 1_1, the first BWP is the 1st corresponding non-dormant BWP within active time; or when a format of the second DCI is DCI format 2_6, the first BWP is the 1st corresponding non-dormant BWP outside active time.

With reference to the first aspect, in still some implementations of the first aspect, when the first cell is deactivated, and a 1st active downlink BWP that is configured by a network device for the terminal device and that is used when the first cell is switched from an inactive mode to an active mode is a dormant BWP, the first BWP is the 1st corresponding non-dormant BWP within active time. In this way, when the 1st active downlink BWP that is configured by the network device for the terminal device and that is used when the first cell is switched from the inactive mode to the active mode is the dormant BWP, the terminal device does not need to perform further determining, and directly determines the quantity of information bits of the first DCI based on the 1st corresponding non-dormant BWP within active time. This is simple and efficient, and helps reduce power consumption.

With reference to the first aspect, in yet some implementations of the first aspect, when the first cell is deactivated, a 1st active downlink BWP that is configured by a network device for the terminal device and that is used when the first cell is switched from an inactive mode to an active mode is a dormant BWP, and the 1st corresponding non-dormant BWP within active time is not configured for the terminal device, the first BWP is the 1st corresponding non-dormant BWP outside active time; or when the first cell is deactivated, a 1st active downlink BWP that is configured by a network device for the terminal device and that is used when the first cell is switched from an inactive mode to an active mode is a dormant BWP, and the 1st corresponding non-dormant BWP within active time is configured for the terminal device, the first BWP is the 1st corresponding non-dormant BWP within active time.

With reference to the first aspect, in some implementations of the first aspect, the 1st corresponding non-dormant BWP within active time is at least one of the following: a 1st non-dormant BWP used when the active downlink BWP of the first cell is switched from a dormant BWP to a non-dormant BWP, where DCI indicating that the active downlink BWP of the first cell is switched to the dormant BWP is received within the active time; or a 1st non-dormant BWP used when the active downlink BWP of the first cell is switched from a dormant BWP to a non-dormant BWP, where a format of DCI indicating that the active downlink BWP of the first cell is switched to the dormant BWP is DCI format 0_1 or DCI format 1_1.

With reference to the first aspect, in some implementations of the first aspect, the 1st corresponding non-dormant BWP of the first cell outside active time is at least one of the following: a 1st non-dormant BWP used when the active downlink BWP of the first cell is switched from a dormant BWP to a non-dormant BWP, where DCI indicating that the active downlink BWP of the first cell is switched to the dormant BWP is received outside the active time; or a 1st non-dormant BWP used when the active downlink BWP of the first cell is switched from a dormant BWP to a non-dormant BWP, where a format of DCI indicating that the active downlink BWP of the first cell is switched to the dormant BWP is DCI format 2_6.

With reference to the first aspect, in some implementations of the first aspect, before the monitoring the first DCI on the PDCCH candidate in the second cell, the method further includes: receiving cross carrier scheduling configuration information, where the cross carrier scheduling configuration information indicates the terminal device to monitor PDCCH candidates in the first cell and the second cell, the PDCCH candidate in the first cell carries third DCI, the PDCCH candidate in the second cell carries the first DCI, and the third DCI is used to schedule data transmission of the third cell.

According to a second aspect, a downlink control information transmission method is provided. The method is performed by a network device, and includes: determining a quantity of information bits of first downlink control information DCI based on a first bandwidth part BWP of a first cell, where the first BWP is a 1st corresponding non-dormant BWP within active time or a 1st corresponding non-dormant BWP outside active time, the first DCI is carried on a physical downlink control channel PDCCH candidate in a second cell, the first DCI is used to schedule data transmission of a third cell, the first cell is a secondary cell, the second cell is a primary cell or a secondary cell, and the first cell is different from the second cell; and sending the first DCI on the PDCCH candidate in the second cell.

According to the solution disclosed in this application, when the primary cell and the secondary cell schedule data transmission of the primary cell, and the secondary cell is deactivated or an active BWP of the secondary cell is a dormant BWP, a rule for determining a size of DCI for scheduling data transmission of the primary cell in the primary cell is re-made. This helps accurately determine the size of the DCI, and improve information transmission performance.

With reference to the second aspect, in some implementations of the second aspect, before the sending the first DCI, the method further includes: sending second DCI, where the second DCI indicates a terminal device to switch an active downlink BWP of the first cell to a dormant BWP, and when the second DCI is sent within active time, the first BWP is the 1st corresponding non-dormant BWP within active time; or when the second DCI is sent outside active time, the first BWP is the 1st corresponding non-dormant BWP outside active time.

With reference to the second aspect, in some other implementations of the second aspect, before the sending the first DCI, the method further includes: sending second DCI, where the second DCI indicates a terminal device to switch an active downlink BWP of the first cell to a dormant BWP, and when a format of the second DCI is DCI format 0_1 or DCI format 1_1, the first BWP is the 1st corresponding non-dormant BWP within active time; or when a format of the second DCI is DCI format 2_6, the first BWP is the 1st corresponding non-dormant BWP outside active time.

With reference to the second aspect, in still some implementations of the second aspect, when the first cell is deactivated, and a 1st active downlink BWP that is configured by the network device for a terminal device and that is used when the first cell is switched from an inactive mode to an active mode is a dormant BWP, the first BWP is the 1st corresponding non-dormant BWP within active time.

With reference to the second aspect, in yet some implementations of the second aspect, when the first cell is deactivated, a 1st active downlink BWP that is configured by the network device for a terminal device and that is used when the first cell is switched from an inactive mode to an active mode is a dormant BWP, and the network device does not configure the 1st corresponding non-dormant BWP within active time for the terminal device, the first BWP is the 1st corresponding non-dormant BWP outside active time; or when the first cell is deactivated, a 1st active downlink BWP that is configured by the network device for a terminal device and that is used when the first cell is switched from an inactive mode to an active mode is a dormant BWP, and the network device configures the 1st corresponding non-dormant BWP within active time for the terminal device, the first BWP is the 1st corresponding non-dormant BWP within active time.

With reference to the second aspect, in some implementations of the second aspect, the 1st corresponding non-dormant BWP of the first cell within active time is at least one of the following: a 1st non-dormant BWP used when the active downlink BWP of the first cell is switched from a dormant BWP to a non-dormant BWP, where DCI indicating that the active downlink BWP of the first cell is switched to the dormant BWP is sent within active time; or a 1st non-dormant BWP used when the active downlink BWP of the first cell is switched from a dormant BWP to a non-dormant BWP, where a format of DCI indicating that the active downlink BWP of the first cell is switched to the dormant BWP is DCI format 0_1 or DCI format 1_1.

With reference to the second aspect, in some implementations of the second aspect, the 1st corresponding non-dormant BWP of the first cell outside active time is at least one of the following: a 1st non-dormant BWP used when the active downlink BWP of the first cell is switched from a dormant BWP to a non-dormant BWP, where DCI indicating that the active downlink BWP of the first cell is switched to the dormant BWP is sent outside active time; or a 1st non-dormant BWP used when the active downlink BWP of the first cell is switched from a dormant BWP to a non-dormant BWP, where a format of DCI indicating that the active downlink BWP of the first cell is switched to the dormant BWP is DCI format 2_6.

With reference to the second aspect, in some implementations of the second aspect, before the sending the first DCI on the PDCCH candidate in the second cell, the method further includes: sending cross carrier scheduling configuration information, where the cross carrier scheduling configuration information indicates the terminal device to monitor PDCCH candidates in the first cell and the second cell, the PDCCH candidate in the first cell carries third DCI, the PDCCH candidate in the second cell carries the first DCI, and the third DCI is used to schedule data transmission of the third cell.

According to a third aspect, a downlink control information transmission method is provided. The method is performed by a terminal device, and includes: when a first cell is deactivated, determining a quantity of information bits of first downlink control information DCI based on a first bandwidth part BWP of the first cell, where the first BWP is an active downlink BWP used before the first cell is deactivated, the first DCI is carried on a physical downlink control channel PDCCH candidate in a second cell, the first DCI is used to schedule data transmission of a third cell, the first cell is a secondary cell of the terminal device, the second cell is a primary cell or a secondary cell of the terminal device, and the first cell is different from the second cell; and monitoring the first DCI on the PDCCH candidate in the second cell based on the quantity of information bits of the first DCI.

According to the solution disclosed in this application, when the primary cell and the secondary cell schedule data transmission of the primary cell, and the secondary cell is deactivated, a rule for determining a size of DCI for scheduling data transmission of the primary cell in the primary cell is re-made. This helps accurately determine the size of the DCI, and improve information transmission performance.

With reference to the third aspect, in some implementations of the third aspect, before the determining a quantity of information bits of first DCI, the method further includes: determining that a 1st active downlink BWP used when the first cell is switched from an inactive mode to an active mode is not configured.

With reference to the third aspect, in some implementations of the third aspect, before the monitoring the first DCI, the method further includes: receiving cross carrier scheduling configuration information, where the cross carrier scheduling configuration information indicates the terminal device to monitor PDCCH candidates in the first cell and the second cell, the PDCCH candidate in the first cell carries third DCI, the PDCCH candidate in the second cell carries the first DCI, and the third DCI is used to schedule data transmission of the third cell.

According to a fourth aspect, a downlink control information transmission method is provided. The method is performed by a network device, and includes: when a first cell is deactivated, determining a quantity of information bits of first downlink control information DCI based on a first bandwidth part BWP of the first cell, where the first BWP is an active downlink BWP used before the first cell is deactivated, the first DCI is carried on a physical downlink control channel PDCCH candidate in a second cell, the first DCI is used to schedule data transmission of a third cell, the first cell is a secondary cell of a terminal device, the second cell is a primary cell or a secondary cell of the terminal device, and the first cell is different from the second cell; and sending the first DCI on the PDCCH candidate in the second cell.

According to the solution disclosed in this application, when the primary cell and the secondary cell schedule data transmission of the primary cell, and the secondary cell is deactivated, a rule for determining a size of DCI for scheduling data transmission of the primary cell in the primary cell is re-made. This helps accurately determine the size of the DCI, and improve information transmission performance.

With reference to the fourth aspect, in some implementations of the fourth aspect, before the determining a quantity of information bits of first DCI, the method further includes: configuring, for the terminal device, no 1st active downlink BWP used when the first cell is switched from an inactive mode to an active mode.

With reference to the fourth aspect, in some implementations of the fourth aspect, before the sending the first DCI, the method further includes: sending cross carrier scheduling configuration information, where the cross carrier scheduling configuration information indicates the terminal device to monitor PDCCH candidates in the first cell and the second cell, the PDCCH candidate in the first cell carries third DCI, the PDCCH candidate in the second cell carries the first DCI, and the third DCI is used to schedule data transmission of the third cell.

According to a fifth aspect, a downlink control information transmission apparatus is provided. The apparatus is configured to implement a function of a terminal device according to the first aspect, or is a terminal device. The apparatus includes: a processing unit, configured to determine a quantity of information bits of first downlink control information DCI based on a first bandwidth part BWP of a first cell, where the first BWP is a 1st corresponding non-dormant BWP within active time or a 1st corresponding non-dormant BWP outside active time, the first DCI is carried on a physical downlink control channel PDCCH candidate in a second cell, the first DCI is used to schedule data transmission of a third cell, the first cell is a secondary cell of the terminal device, the second cell is a primary cell or a secondary cell of the terminal device, and the first cell is different from the second cell; and a transceiver unit, configured to monitor the first DCI on the PDCCH candidate in the second cell based on the quantity of information bits of the first DCI.

With reference to the fifth aspect, in some implementations of the fifth aspect, the transceiver unit is further configured to receive second DCI, and the processing unit is further configured to switch an active downlink BWP of the first cell to a dormant BWP based on the second DCI, where when the second DCI is received within active time, the first BWP is the 1st corresponding non-dormant BWP within active time; or when the second DCI is received outside active time, the first BWP is the 1st corresponding non-dormant BWP outside active time.

With reference to the fifth aspect, in some other implementations of the fifth aspect, the transceiver unit is further configured to receive second DCI, and the processing unit is further configured to switch an active downlink BWP of the first cell to a dormant BWP based on the second DCI, where when a format of the second DCI is DCI format 0_1 or DCI format 1_1, the first BWP is the 1st corresponding non-dormant BWP within active time; or when a format of the second DCI is DCI format 2_6, the first BWP is the 1st corresponding non-dormant BWP outside active time.

With reference to the fifth aspect, in still some implementations of the fifth aspect, when the first cell is deactivated, and a 1st active downlink BWP that is configured by a network device for the terminal device and that is used when the first cell is switched from an inactive mode to an active mode is a dormant BWP, the first BWP is the 1st corresponding non-dormant BWP within active time.

With reference to the fifth aspect, in yet some implementations of the fifth aspect, when the first cell is deactivated, a 1st active downlink BWP that is configured by a network device for the terminal device and that is used when the first cell is switched from an inactive mode to an active mode is a dormant BWP, and the 1st corresponding non-dormant BWP within active time is not configured for the terminal device, the first BWP is the 1st corresponding non-dormant BWP outside active time; or when the first cell is deactivated, a 1st active downlink BWP that is configured by a network device for the terminal device and that is used when the first cell is switched from an inactive mode to an active mode is a dormant BWP, and the 1st corresponding non-dormant BWP within active time is configured for the terminal device, the first BWP is the 1st corresponding non-dormant BWP within active time.

With reference to the fifth aspect, in some implementations of the fifth aspect, the 1st corresponding non-dormant BWP of the first cell within active time is at least one of the following: a 1st non-dormant BWP used when the active downlink BWP of the first cell is switched from a dormant BWP to a non-dormant BWP, where DCI indicating that the active downlink BWP of the first cell is switched to the dormant BWP is received within the active time; or a 1st non-dormant BWP used when the active downlink BWP of the first cell is switched from a dormant BWP to a non-dormant BWP, where a format of DCI indicating that the active downlink BWP of the first cell is switched to the dormant BWP is DCI format 0_1 or DCI format 1_1.

With reference to the fifth aspect, in some implementations of the fifth aspect, the 1st corresponding non-dormant BWP of the first cell outside active time is at least one of the following: a 1st non-dormant BWP used when the active downlink BWP of the first cell is switched from a dormant BWP to a non-dormant BWP, where DCI indicating that the active downlink BWP of the first cell is switched to the dormant BWP is received outside the active time; or a 1st non-dormant BWP used when the active downlink BWP of the first cell is switched from a dormant BWP to a non-dormant BWP, where a format of DCI indicating that the active downlink BWP of the first cell is switched to the dormant BWP is DCI format 2_6.

With reference to the fifth aspect, in some implementations of the fifth aspect, the transceiver unit is further configured to receive cross carrier scheduling configuration information, where the cross carrier scheduling configuration information indicates the terminal device to monitor PDCCH candidates in the first cell and the second cell, the PDCCH candidate in the first cell carries third DCI, the PDCCH candidate in the second cell carries the first DCI, and the third DCI is used to schedule data transmission of the third cell.

According to a sixth aspect, a downlink control information transmission apparatus is provided. The apparatus is configured to implement a function of a network device according to the second aspect, or is a network device. The apparatus includes: a processing unit, configured to determine a quantity of information bits of first downlink control information DCI based on a first bandwidth part BWP of a first cell, where the first BWP is a 1st corresponding non-dormant BWP within active time or a 1st corresponding non-dormant BWP outside active time, the first DCI is carried on a physical downlink control channel PDCCH candidate in a second cell, the first DCI is used to schedule data transmission of a third cell, the first cell is a secondary cell, the second cell is a primary cell or a secondary cell, and the first cell is different from the second cell; and a transceiver unit, configured to send the first DCI on the PDCCH candidate in the second cell.

With reference to the sixth aspect, in some implementations of the sixth aspect, the transceiver unit is further configured to send second DCI, where the second DCI indicates a terminal device to switch an active downlink BWP of the first cell to a dormant BWP, and when the second DCI is sent within active time, the first BWP is the $1^{st}$ corresponding non-dormant BWP within active time; or when the second DCI is sent outside active time, the first BWP is the $1^{st}$ corresponding non-dormant BWP outside active time.

With reference to the sixth aspect, in some other implementations of the sixth aspect, the transceiver unit is further configured to send second DCI, where the second DCI indicates a terminal device to switch an active downlink BWP of the first cell to a dormant BWP, and when a format of the second DCI is DCI format 0_1 or DCI format 1_1, the first BWP is the $1^{st}$ corresponding non-dormant BWP within active time; or when a format of the second DCI is DCI format 2_6, the first BWP is the $1^{st}$ corresponding non-dormant BWP outside active time.

With reference to the sixth aspect, in still some implementations of the sixth aspect, when the first cell is deactivated, and a $1^{st}$ active downlink BWP that is configured by the network device for a terminal device and that is used when the first cell is switched from an inactive mode to an active mode is a dormant BWP, the first BWP is the $1^{st}$ corresponding non-dormant BWP within active time.

With reference to the sixth aspect, in yet some implementations of the sixth aspect, when the first cell is deactivated, a $1^{st}$ active downlink BWP that is configured by the network device for a terminal device and that is used when the first cell is switched from an inactive mode to an active mode is a dormant BWP, and the network device does not configure the $1^{st}$ corresponding non-dormant BWP within active time for the terminal device, the first BWP is the $1^{st}$ corresponding non-dormant BWP outside active time; or when the first cell is deactivated, a $1^{st}$ active downlink BWP that is configured by the network device for a terminal device and that is used when the first cell is switched from an inactive mode to an active mode is a dormant BWP, and the network device configures the $1^{st}$ corresponding non-dormant BWP within active time for the terminal device, the first BWP is the $1^{st}$ corresponding non-dormant BWP within active time.

With reference to the sixth aspect, in some implementations of the sixth aspect, the $1^{st}$ corresponding non-dormant BWP of the first cell within active time is at least one of the following: a $1^{st}$ non-dormant BWP used when the active downlink BWP of the first cell is switched from a dormant BWP to a non-dormant BWP, where DCI indicating that the active downlink BWP of the first cell is switched to the dormant BWP is sent within active time; or a $1^{st}$ non-dormant BWP used when the active downlink BWP of the first cell is switched from a dormant BWP to a non-dormant BWP, where a format of DCI indicating that the active downlink BWP of the first cell is switched to the dormant BWP is DCI format 0_1 or DCI format 1_1.

With reference to the sixth aspect, in some implementations of the sixth aspect, the $1^{st}$ corresponding non-dormant BWP of the first cell outside active time is at least one of the following: a $1^{st}$ non-dormant BWP used when the active downlink BWP of the first cell is switched from a dormant BWP to a non-dormant BWP, where DCI indicating that the active downlink BWP of the first cell is switched to the dormant BWP is sent outside active time; or a $1^{st}$ non-dormant BWP used when the active downlink BWP of the first cell is switched from a dormant BWP to a non-dormant BWP, where a format of DCI indicating that the active downlink BWP of the first cell is switched to the dormant BWP is DCI format 2_6.

With reference to the sixth aspect, in some implementations of the sixth aspect, the transceiver unit is further configured to send cross carrier scheduling configuration information, where the cross carrier scheduling configuration information indicates the terminal device to monitor PDCCH candidates in the first cell and the second cell, the PDCCH candidate in the first cell carries third DCI, the PDCCH candidate in the second cell carries the first DCI, and the third DCI is used to schedule data transmission of the third cell.

According to a seventh aspect, a communication apparatus is provided and includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to any one of the possible implementations of the first aspect or the third aspect through a logic circuit or by executing code instructions.

According to an eighth aspect, a communication apparatus is provided and includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to any one of the possible implementations of the second aspect or the fourth aspect through a logic circuit or by executing code instructions.

According to a ninth aspect, a computer-readable storage medium is provided. The computer-readable storage medium stores a computer program or instructions. When the computer program or the instructions are executed, the method according to any one of the possible implementations of the first aspect to the fourth aspect is implemented.

According to a tenth aspect, a computer program product including instructions is provided. When the instructions are run, the method according to any one of the possible implementations of the first aspect to the fourth aspect is implemented.

According to an eleventh aspect, a computer program is provided. The computer program includes code or instructions, and when the code or the instructions are run, the method according to any one of the possible implementations of the first aspect to the fourth aspect is implemented.

According to a twelfth aspect, a chip system is provided. The chip system includes a processor, further includes a memory, and is configured to implement the method according to any one of the possible implementations of the first aspect to the fourth aspect. The chip system includes a chip, or includes a chip and another discrete component.

According to a thirteenth aspect, a communication system is provided, and includes a terminal device and a network device.

The terminal device is configured to implement the method according to the implementations of the first aspect or the third aspect, and the network device is configured to implement the method according to the implementations of the second aspect or the fourth aspect.

In a possible design, the communication system further includes another device that interacts with the terminal device or the network device in the solutions provided in embodiments of this application.

## BRIEF DESCRIPTION OF DRAWINGS

FIG. 1 is a diagram of an architecture of a mobile communication system to which an embodiment of this application is applied;

FIG. 2 is a diagram of a DRX cycle and a PDCCH monitoring occasion;

FIG. 3 is a diagram of a DRX cycle and a radio frame;

FIG. 4 is a diagram of an example of a downlink control information transmission method according to this application;

FIG. 5 is a schematic flowchart of a first specific example of a downlink control information transmission method according to this application;

FIG. 6 is a schematic flowchart of a second specific example of a downlink control information transmission method according to this application;

FIG. 7 is a diagram of an example of a communication apparatus according to this application; and

FIG. 8 is a diagram of another example of a communication apparatus according to this application.

## DESCRIPTION OF EMBODIMENTS

The following describes technical solutions of this application with reference to the accompanying drawings.

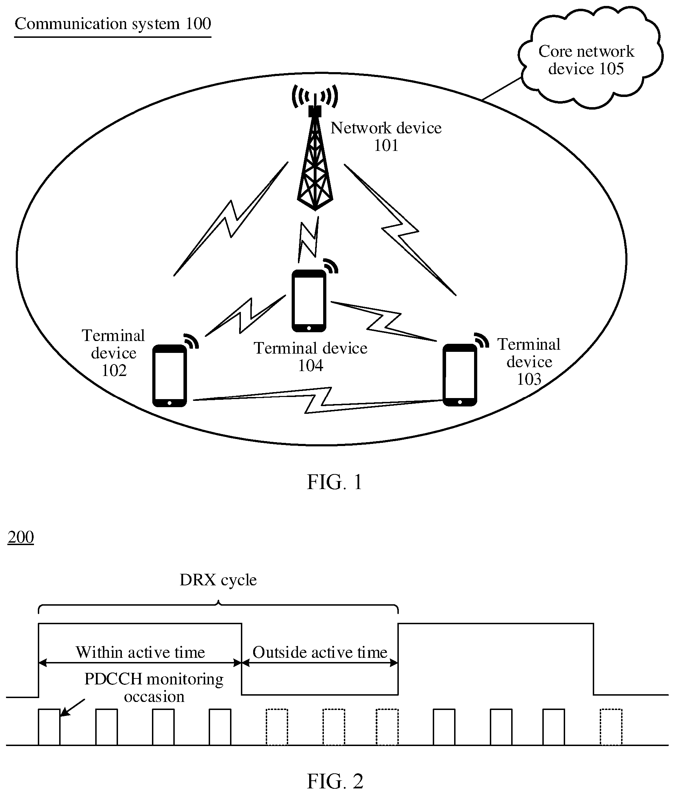

FIG. 1 is a diagram of an architecture of a mobile communication system to which an embodiment of this application is applied.

As shown in FIG. 1, the communication system 100 may include one or more network devices, for example, a network device 101 shown in FIG. 1. The communication system 100 may further include one or more terminal devices, for example, a terminal device 102, a terminal device 103, and a terminal device 104 shown in FIG. 1. The communication system 100 may support a sidelink (sidelink) communication technology, for example, sidelink communication between the terminal device 102 and the terminal device 103, and sidelink communication between the terminal device 102 and the terminal device 104.

It should be understood that FIG. 1 is merely a diagram. The communication system may further include another network device, for example, may further include a core network device 105, and a wireless relay device and a wireless backhaul device that are not shown in FIG. 1. A quantity of network devices and a quantity of terminal devices included in the mobile communication system are not limited in embodiments of this application.

The terminal device in embodiments of this application is a device having a wireless transceiver function, and may send a signal to the network device, or receive a signal from the network device. The terminal device may also be referred to as a terminal, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The network device in embodiments of this application may be a radio access device that is used by the terminal to access the communication system in a wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit that completes a part of functions of the base station, for example, may be a central unit (central unit, CU), or may be a distributed unit (distributed unit, DU). The CU herein completes functions of a radio resource control (radio resource control, RRC) protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of some or all physical layers. For specific descriptions of the foregoing protocol layers, refer to related technical specifications in the 3rd generation partnership project (3rd generation partnership project, 3GPP). The network device may be a macro base station, may be a micro base station or an indoor base station, or may be a relay node, a donor node, or the like. A specific technology and a specific device form that are used by the network device are not limited in embodiments of this application.

Embodiments of this application may be applied to downlink signal transmission, or may be applied to uplink signal transmission. For the downlink signal transmission, a sending device is a network device, and a corresponding receiving device is a terminal. For the uplink signal transmission, a sending device is a terminal, and a corresponding receiving device is a network device.

Communication between the network device and the terminal and between terminals may be performed through a licensed spectrum, or may be performed through an unlicensed spectrum, or may be performed through both a licensed spectrum and an unlicensed spectrum. Communication may be performed between the network device and the terminal and between the terminals through a spectrum below 6 gigahertz (gigahertz, GHz), a spectrum above 6 GHz, or both a spectrum below 6 GHz and a spectrum above 6 GHz. A spectrum resource used between the network device and the terminal is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. A function of the terminal may alternatively be performed by a module (for example, a chip or a modem) in the terminal, or may be performed by an apparatus including the function of the terminal.

To better describe implementations of this application, concepts related to embodiments of this application are first described before embodiments of this application are described.

1. Cell (cell) and carrier (carrier)

(1) Carrier

The carrier is a radio signal that is transmitted by a radio frequency device of a network device or a terminal and that has a specific frequency, bandwidth, and standard. The carrier is a body used to carry information in wireless communication. A carrier used by the network device to send information is referred to as a downlink carrier, and a carrier used by the terminal to send information is referred to as an uplink carrier.

(2) Cell

Coverage of each network device may be divided into one or more cells. In a current NR standard, one downlink carrier may be configured for one cell, and optionally, one uplink carrier may be configured for the cell. For a terminal, a cell that provides a service for the terminal is referred to as a serving cell.

(3) Carrier aggregation (carrier aggregation, CA) and dual connectivity (dual connectivity, DC)

To implement high-speed transmission, NR supports carrier aggregation and dual connectivity technologies. A terminal that supports CA or DC may simultaneously transmit data on a plurality of carriers, to improve a data transmission rate. Each carrier in CA is also referred to as a component carrier (component carrier, CC). In DC, a terminal establishes connections to a plurality of cells. These cells are classified into two groups: a master cell group (master cell group, MCG) and a secondary cell group (secondary cell group, SCG). If dual connectivity is not established, a group of cells communicating with the terminal is an MCG. A "PCell" in an SCG is a primary secondary cell (primary secondary cell, PSCell), and other cells in the MCG and the SCG are secondary cells (secondary cell, SCell).

The terminal may simultaneously use a PCell in the MCG and the SCell in the MCG to transmit data by using the carrier aggregation technology, or may simultaneously use the PSCell in the SCG and the SCell in the SCG to transmit data by using the carrier aggregation technology.

In subsequent descriptions of this application, when this application is applied to the MCG, the PCell is a PCell in the MCG, and the SCell is an SCell in the MCG; or when this application is applied to the SCG, the PCell is a PSCell in the SCG, and the SCell is an SCell in the SCG.

2. Bandwidth part (bandwidth part, BWP) and bandwidth part switching

(1) BWP

A concept of the BWP is introduced in NR. One BWP is a segment of contiguous frequency resources on one carrier. After a BWP is configured and activated, the BWP is referred to as an active BWP. In a current version protocol, one terminal can have only one active downlink BWP on one downlink carrier, and can have only one active uplink BWP on one uplink carrier. Uplink data and control information sent by the terminal are sent in the active uplink BWP, and downlink data and control information is received in the active downlink BWP.

There may be one or more BWPs on one carrier, and a bandwidth of a BWP on one carrier is less than or equal to a bandwidth of the carrier.

(2) BWP switching

To enable the terminal to send and receive data in different BWPs at different moments based on a service requirement, NR supports BWP switching triggered by using DCI for scheduling data. The DCI is carried on a physical downlink control channel (physical downlink control channel, PDCCH).

A downlink BWP switching instruction may be carried in DCI format (format) 1_1 or DCI format 1_2 for scheduling a physical downlink shared channel (physical downlink shared channel, PDSCH), and an uplink BWP switching instruction may be carried in DCI format 0_1 or DCI format 0_2 for scheduling a physical uplink shared channel (physical uplink shared channel, PUSCH). After receiving the DCI, the terminal switches to a new BWP indicated by the DCI to send or receive data. It should be noted that the BWP switching herein is switching between non-dormant BWPs in the active BWP.

3. Carrier dormancy

Currently, a dormancy (dormancy) mechanism of the SCell is introduced in 3GPP release 16 (release 16, R16). Both uplink transmission and downlink transmission of a dormant (dormant) SCell are stopped, but the terminal still periodically measures the cell, and reports measurement information of the cell to the network device via another non-dormant cell. Switching between a dormancy behavior and a non-dormancy (non-dormancy) behavior of the SCell is implemented through BWP switching. When an SCell is indicated as dormancy, the terminal switches a currently active downlink BWP to a dormant BWP in the SCell, and the terminal does not need to perform PDCCH monitoring in the dormant BWP; or when the SCell is a scheduled carrier in cross carrier scheduling, the terminal does not need to detect a PDCCH that is on a corresponding scheduling carrier and that is used to schedule the SCell. An identifier (identifier, ID) of the dormant BWP is indicated by a dormantBWP-Id (dormant BWP identifier) information element in RRC signaling.

Switching between a dormancy state and a non-dormancy state of the SCell is indicated by DCI.

(1) In a connected mode and without entering a connected mode discontinuous reception (connected mode discontinuous reception, C-DRX) mode (a non-C-DRX mode for short below) or in an active time period in a C-DRX mode, there are the following two indication manners:

Manner 1: A secondary cell dormancy indication (SCell dormancy indication) field in DCI format 0_1 or 1_1 indicates whether the SCell is dormancy or non-dormancy. In this case, the DCI may be used to schedule data simultaneously.

Manner 2: A specific field in DCI format 1_1 indicates whether the SCell is dormancy or non-dormancy. In this case, the DCI cannot be used to schedule data simultaneously.

(2) In a non-active time period in a C-DRX mode, there is one indication manner:

Manner 3: An SCell dormancy indication field in DCI format 2_6 indicates whether the SCell is dormancy or non-dormancy.

In this specification, unless otherwise specified, within active time (within active time) includes two cases: one is when the terminal is not configured with C-DRX (or the terminal does not enter the C-DRX mode), and the other is an active time period in which the terminal is in the C-DRX mode. Outside active time (outside active time) is a non-active time period in which the terminal is in the C-DRX mode.

In this application, both within active time and outside active time are for a specific terminal.

For a cell, the network device may configure an identifier of a corresponding 1st non-dormant BWP within active time by using a firstWithinActiveTimeBWP-Id information element in RRC signaling, and configure an identifier of a 1st corresponding BWP outside active time by using a firstOutsideActiveTimeBWP-Id information element. If a PDCCH indicating to switch an active downlink BWP of a cell from a dormant BWP to a non-dormant BWP is received in a non-C-DRX mode of the cell or in an active time period in a C-DRX mode of the cell, a downlink BWP whose ID is first-WithinActiveTimeBWP-Id is activated when a state of the cell is switched from dormancy to non-dormancy. If a PDCCH indicating to switch an active downlink BWP of a cell from a dormant BWP to a non-dormant BWP is received in a non-active time period in a C-DRX mode of the cell, a downlink BWP whose ID is firstOutsideActiveTimeBWP-Id is activated when a state of the cell is switched from dormancy to non-dormancy.

There are two terminal capabilities: support receiving of an SCell dormancy indication with DCI format 0_1/1_1 within active time, and support receiving of an SCell dormancy indication with DCI format 2_6 outside active time. The terminal may not support the two capabilities, or may support one or both of the two capabilities, and notify, through capability reporting, the network device of a capability supported by the terminal.

The network device may configure dormantBWP-Id for a terminal reporting that the terminal supports at least one of the two capabilities.

For a terminal that reports the capability of supporting receiving of the SCell dormancy indication with DCI format 0_1/1_1 within active time, the network device may configure firstWithinActiveTimeBWP-Id, or may not configure firstWithinActiveTimeBWP-Id. For a terminal that reports the capability of supporting receiving of the SCell dormancy indication with DCI format 2_6 outside active time, the network device may configure firstOutsideActiveTimeBWP-Id, or may not configure firstOutsideActiveTimeBWP-Id.

For a terminal that does not report the capability of supporting receiving of the SCell dormancy indication with DCI format 0_1/1_1 within active time, the network device cannot configure firstWithinActiveTimeBWP-Id. For a terminal that does not report the capability of supporting receiving of the SCell dormancy indication with DCI format 2_6 outside active time, the network device cannot configure firstOutsideActiveTimeBWP-Id.

The following describes a C-DRX mechanism. In the C-DRX mechanism, the terminal may periodically monitor a PDCCH based on a DRX cycle configured by the network device. As shown in FIG. 2, one DRX cycle usually includes two time periods: active time (active time) and non-active time (non-active time), where the non-active time may also be referred to as outside active time (outside active time). Within active time, the terminal needs to monitor the PDCCH on a PDCCH monitoring occasion. Within non-active time, the terminal does not need to monitor the PDCCH, to reduce power consumption of the terminal.

The active time includes running time of an on-duration timer (drx-onDurationTimer). The network device configures a length of drx-onDurationTimer for the terminal by using RRC signaling. A long DRX cycle (Long DRX cycle) is used as an example. A parameter drx-LongCycle of a length of the long DRX cycle, a parameter start offset (drx-StartOffset) used to determine a start subframe of the DRX cycle, and a slot offset (drx-SlotOffset) in the start subframe of the DRX cycle are further configured. If the long DRX cycle is used, the terminal starts drx-onDurationTimer (onDurationTimer for short below) when a subframe number satisfies the following formula (1):

$$[(SFN \times 10) + \text{subframe number}] \text{ modulo } (\text{drx-LongCycle}) = \text{drx-StartOffset} \quad (1)$$

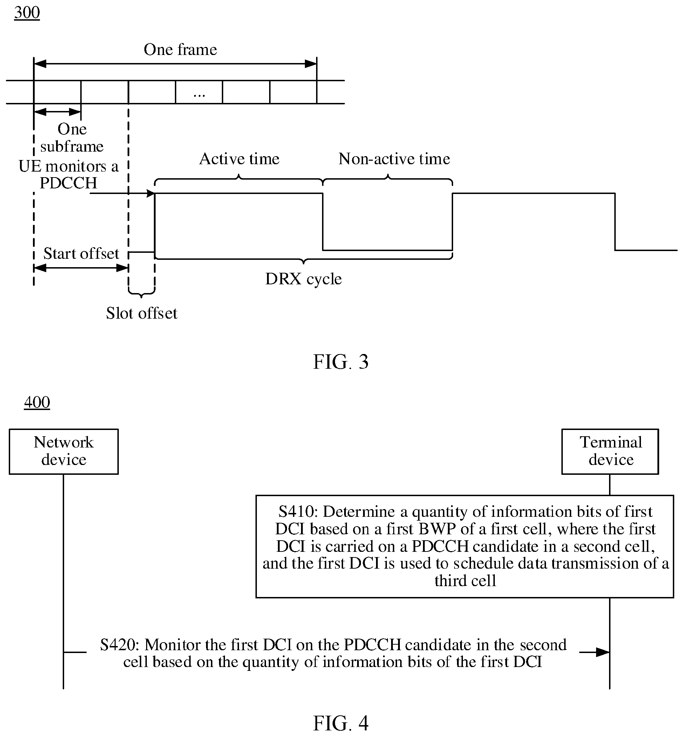

SFN is a system frame number, and modulo represents a modulo operation. A system frame may also be referred to as a radio frame. One radio frame is 10 ms, one radio frame may include a plurality of subframes, and each subframe includes one or more slots. As shown in FIG. 3, onDurationTimer is started after a start DRX subframe of the long DRX cycle is shifted by drx-SlotOffset, where non-active time corresponds to an opportunity for DRX.

If a short DRX cycle is used, the terminal starts drx-onDurationTimer when a subframe number satisfies the following formula (2): [(SFN × 10) + subframe number] modulo (drx-ShortCycle) = (drx-StartOffset) modulo (drx-Short-Cycle) (2)

That is, onDurationTimer is started after a start subframe of the short DRX cycle is shifted by drx-SlotOffset.

Although not shown in the figure, in the C-DRX mechanism, the active time may further include: running time of drx-InactivityTimer (inactivity timer InactivityTimer for short), running time of drx-RetransmissionTimerDL (downlink retransmission timer RetransmissionTimerDL for short), and running time of drx-RetransmisionTimerUL (uplink retransmission timer RetransmisionTimerUL for short). C-DRX parameters configured by the network device for the terminal by using RRC signaling may be specifically shown in Table 1, including conditions for triggering drx-InactivityTimer, drx-RetransmissionTimerDL, and drx-RetransmisionTimerUL. That is, the three timers are started only when corresponding data is transmitted.

Table 1 Example of a C-DRX parameter table

| C-DRX parameter | Description |
|---|---|
| drx-SlotOffset | indicates a time offset before drx-onDurationTimer is started. |
| drx-LongCycleStartOffset | includes two parameters: drx-LongCycle and drx-StartOffset, where drx-LongCycle indicates duration of a long DRX cycle, and drx-StartOffset indicates start time of a DRX cycle. |
| drx-ShortCycle | indicates duration of a short DRX cycle, where the short DRX cycle is an optional parameter, and switching between the long DRX cycle and the short DRX cycle can be performed. |
| drx-ShortCycleTimer | indicates duration in which a terminal uses the short DRX cycle, where this parameter is an optional parameter. |
| drx-onDurationTimer | indicates duration in which the DRX cycle starts, and a PDCCH is monitored within the duration of the timer. |
| drx-InactivityTimer | When it is detected that the PDCCH indicates UL or DL initial transmission, the timer is started (or restarted), and the PDCCH continues to be monitored within duration of the timer, which may be understood as that drx-InactivityTimer prolongs active time of the DRX cycle. |
| drx-HARQ-RTT-TimerDL | indicates minimum duration for which the terminal needs to wait before DL retransmission scheduling may be received, and each DL HARQ process corresponds to one timer. If it is detected that the PDCCH indicates downlink scheduling, the timer corresponding to the HARQ process is started after a HARQ feedback. |
| drx-HARQ-RTT-TimerUL | indicates minimum duration for which the terminal needs to wait before UL retransmission scheduling may be received, and each UL HARQ process corresponds to one timer. If it is detected that the PDCCH indicates uplink scheduling, the timer corresponding to the HARQ process is started after a PUSCH. Specifically, when the PDCCH schedules a bundle of (a bundle of) PUSCHs, the terminal starts, on a $1^{st}$ symbol after a $1^{st}$ PUSCH end symbol or on a $1^{st}$ symbol after a slot of a $1^{st}$ PUSCH, the timer corresponding to the HARQ process. When the PDCCH does not schedule a bundle of PUSCHs, the terminal starts, on a $1^{st}$ symbol after an end symbol on which a PUSCH is sent or on a $1^{st}$ symbol after a slot in which a PUSCH is sent, the timer corresponding to the HARQ process. |
| drx-RetransmissionTimerDL | indicates maximum duration for which the terminal expects to receive DL retransmission scheduling, and each DL HARQ process corresponds to one timer. If drx-HARQ-RTT-TimerDL expires and a PDSCH corresponding to a HARQ process is not correctly decoded, drx-RetransmissionTimerDL of the process is started. |
| drx-RetransmisionTimerUL | indicates maximum duration for which the terminal expects to receive UL retransmission scheduling, and each UL HARQ process corresponds to one timer. If drx-HARQ-RTT-TimerUL expires, drx-RetransmissionTimerUL corresponding to a HARQ process is started. |

Active time may further include: a running period of ra-ContentionResolutionTimer (used for contention resolution in a random access procedure) or msgB-ResponseWindow (used for 2-step random access contention resolution); a waiting period after the terminal sends a scheduling request (scheduling request, SR) on a PUCCH; and a period in which the terminal has not received a PDCCH indicating new transmission after successfully receiving a non-contention-based random access response (random access response, RAR).

4. Cell activation and deactivation

The PCell does not support activation/deactivation, and the SCell supports activation/deactivation. When the SCell is in an inactive mode,

(1) no sounding reference signal (sounding reference signal, SRS) is sent in the SCell;
(2) no channel state information (channel state information, CSI) of the SCell is reported;

(3) no transmission is performed on an uplink shared channel (uplink shared channel, UL-SCH) in the SCell;

(4) no transmission is performed on a random access channel (random access channel, RACH) in the SCell;

(5) a physical downlink control channel PDCCH in the SCell is not monitored; and

(6) no transmission is performed on a physical uplink control channel (physical uplink control channel, PUCCH) in the SCell.

For a cell, the network device may configure, by using an RRC information element firstActiveDownlinkBWP-Id, an identifier of a 1st active downlink BWP used when the terminal switches from an inactive mode to an active mode, and may also configure, by using an RRC information element firstActiveUplinkBWP-Id, an identifier of a 1st active uplink BWP used when the terminal switches from the inactive mode to the active mode. When the terminal enters the active mode from the inactive mode, a downlink BWP whose ID is firstActiveDownlinkBWP-Id and an uplink BWP whose ID is first-ActiveUplinkBWP-Id in the cell are activated.

5. Cross carrier scheduling

A cell in which DCI corresponding to a data channel is sent is referred to as a scheduling cell or a primary scheduling cell (scheduling cell), and a cell in which the data channel is sent is referred to as a scheduled cell (scheduled cell). If a data channel and DCI for scheduling the data channel are sent in a same cell, that is, the cell is both a scheduling cell and a scheduled cell, the cell is referred to as a self-scheduling (self-scheduling) cell. If a data channel and DCI for scheduling the data channel are sent in different cells, a cell for carrying the DCI is referred to as a scheduling cell, and a cell for carrying the data channel is referred to as a scheduled cell. This scheduling form is referred to as cross carrier scheduling (cross carrier scheduling, CCS). One scheduling cell may correspond to a plurality of scheduled cells, that is, one scheduling cell may be used to send DCI to schedule data of a plurality of scheduled cells.

6. Downlink control information

(1) Format of downlink control information

There are a plurality of DCI formats (DCI format) for DCI. DCI formats related to this application include DCI format 0_1, DCI format 0_2, DCI format 1_1, and DCI format 1_2. DCI formats 0_1 and 0_2 are used to schedule uplink data of the terminal, that is, schedule PUSCH transmission. DCI formats 1_1 and 1_2 are used to schedule downlink data of the terminal, that is, schedule PDSCH transmission.

In this application, unless otherwise specified, the DCI and the DCI format may be interchangeably used. For example, first DCI may alternatively be a first DCI format, and second DCI may alternatively be a second DCI format. For details about the DCI format, refer to section 7.3.1 in the 3GPP technical specification 38.212 V16.10.0.

(2) Size of downlink control information

There are two understandings of the size of the downlink control information (DCI size): a size of an information bit (bit) in the DCI, and including a size of an information bit in the DCI and a size of a cyclic redundancy check (cyclic redundancy check, CRC). The size of the information bit in the DCI is also referred to as a payload (payload) size. In an NR system, a bit width of the CRC is 24.

(3) DCI size alignment

When DCI sizes are different, the terminal may use different receiving manners. To reduce receiving complexity of the terminal, a quantity of DCI sizes is usually reduced in a DCI size alignment manner. If DCI sizes of two DCI formats are different, DCI sizes need to be aligned. In a general manner, 0 is added behind a payload of a DCI format with a shorter DCI size until DCI sizes of the two DCI formats are the same.

7. Two cells schedule one cell

A feature that two cells schedule one cell is introduced in NR release 17 (release 17, R17). To be specific, both a PCell and an SCell may send DCI through a PDCCH, to schedule data transmission of the PCell. When both the PCell and the SCell may schedule the data transmission of the PCell, for a DCI format, a size of DCI for scheduling a PCell in the PCell needs to be aligned with a size of DCI for scheduling the PCell in an SCell. In this application, scheduling data transmission of the PCell may be referred to as scheduling the PCell for short.

For a terminal configured to schedule a PCell in an SCell, if a quantity of information bits of DCI format 0_1 for scheduling the PCell in the PCell is not equal to a quantity of information bits of DCI format 0_1 for scheduling the PCell in the SCell, 0 should be added behind DCI format 0_1 with fewer bits until payload sizes of the two DCI formats 0_1 are the same. Payload size alignment manners of DCI format 0_2, DCI format 1_1, and DCI format 1_2 are the same as the payload size alignment manner of DCI format 0_1.

When the SCell is deactivated or an active DL BWP of the SCell is a dormant DL BWP, a PDCCH for scheduling the PCell is not sent in the SCell. However, because a size of DCI for scheduling the PCell in the PCell needs to be aligned with a size of DCI for scheduling the PCell in the SCell, the size of the DCI for scheduling the PCell in the SCell still needs to be determined, to determine the size of the DCI for scheduling the PCell in the PCell. For example, when the SCell is deactivated, the terminal determines, based on a DL BWP whose ID is firstActiveDownlinkBWP-Id in the SCell, a quantity of information bits of DCI format 0_1, DCI format 0_2, DCI format 1_1, or DCI format 1_2 carried on a PDCCH in the PCell. If the active DL BWP of the SCell is a dormant DL BWP, the terminal determines, based on a DL BWP whose ID is firstWithinActiveTimeBWP-Id in the SCell, a quantity of information bits of DCI format 0_1, DCI format 0_2, DCI format 1_1, or DCI format 1_2 carried on a PDCCH in the PCell.

When two cells may schedule one cell, the two cells may be referred to as scheduling cells, and some fields in DCI are related to the scheduling cells, for example, an SCell dormancy indication field and a transmission configuration indication (transmission configuration indication, TCI) field. For the SCell dormancy indication field, if the scheduling cell is a PCell, DCI format 0_1 and DCI format 1_1 sent in the scheduling cell may include the SCell dormancy indication field; or if the scheduling cell is an SCell, DCI format 0_1 and DCI format 1_1 sent in the scheduling cell do not include the SCell dormancy indication field. For the TCI field, DCI format 1_1 and DCI format 1_2 may include the field. In DCI format 1_1, if RRC signaling sent by the network device to the terminal does not include a tci-PresentInDCI information element, that is, configuring a TCI by using DCI is not enabled, the TCI field is 0 bits; or if RRC signaling sent by the network device includes a tci-PresentInDCI information element, that is, configuring a TCI by using DCI is enabled, the TCI field is 3 bits. Because the tci-PresentInDCI information element is a related parameter in a configuration of a control resource set, the control resource set is configured on the scheduling cell, and configurations of tci-PresentInDCI information elements of different scheduling cells may be different, whether DCI format 1_1 includes the TCI field is related to a configuration of the scheduling cell. In DCI format 1_2, if RRC signaling sent by the network device to the terminal does not include a tci-PresentDCI-1-2-r16 information element, the TCI field is 0 bits; or if RRC signaling sent by the network device to the terminal includes a tci-PresentDCI-1-2-r16 information element, the tci-PresentDCI-1-2-r16 information element indicates a quantity of bits of the TCI field in DCI format 1_2, and tci-PresentDCI-1-2-r16 may be configured as 1, 2, or 3. Because tci-PresentDCI-1-2-r16 is a related parameter in a configuration of a control resource set, the control resource set is configured on the scheduling cell, and configurations of tci-PresentDCI-1-2-r16 of different scheduling cells may be different, whether DCI format 1_2 includes the TCI field and the quantity of bits of the TCI field are related to a configuration of the scheduling cell. In this application, determining a quantity of information bits of DCI based on a BWP ID may be understood as determining, based on a BWP configuration, a DCI field related to the configuration of the scheduling cell in the DCI, for example, the SCell dormancy indication field and the TCI field in the DCI.

However, after the SCell is deactivated, a 1st active downlink BWP used when the SCell is switched from an inactive mode to an active mode may be set to a dormant BWP. In this case, the terminal cannot determine, based on the DL BWP whose ID is firstActiveDownlinkBWP-Id in the SCell, a quantity of information bits of a DCI format carried on a PDCCH in the PCell. Because the terminal does not need to monitor a control channel in the dormant BWP, a control channel resource set is not configured. As a result, a size of the SCell dormancy indication field in the DCI cannot be determined, and a quantity of information bits of a DCI format carried on a PDCCH in the SCell cannot be determined. Because the quantity of information bits of the DCI format carried on the PDCCH in the PCell needs to be aligned with the quantity of information bits of the DCI format carried on the PDCCH in the SCell, and the quantity of information bits of the DCI format carried on the PDCCH in the SCell is unknown, the quantity of information bits of the DCI format carried on the PDCCH in the PCell cannot be determined. In addition, the network device may not configure firstActiveDownlinkBWP-Id for the terminal. In this case, the terminal cannot determine, based on the DL BWP whose ID is firstActiveDownlinkBWP-Id in the SCell, the quantity of information bits of the DCI format carried on the PDCCH in the PCell. In addition, when the active DL BWP of the SCell is a dormant DL BWP, a state and a mode of the terminal are not considered, the terminal is directly configured to determine, based on the DL BWP whose ID is firstWithinActiveTimeBWP-Id in the SCell, the quantity of information bits of the DCI format carried on the PDCCH in the PCell, and it is possible that the quantity of information bits of the DCI format cannot be obtained. For example, if only firstOutsideActiveTimeBWP-Id is configured for the terminal, and firstWithinActiveTimeBWP-Id is not configured for the terminal, the terminal cannot determine, based on the DL BWP whose ID is firstWithinActiveTimeBWP-Id in the SCell, the quantity of information bits of the DCI format carried on the PDCCH in the PCell.

Based on this, this application provides a downlink control information transmission method and an apparatus, to accurately determine a size of DCI for scheduling data transmission of a primary cell in the primary cell, and improve information transmission performance.

The following describes the technical solutions of this application in detail by using interaction between a terminal and a network device as an example. The terminal may be the terminal (for example, the terminal device 102, the terminal device 103, or the terminal device 104) in FIG. 1, and the network device may be the network device 101 in FIG. 1.

FIG. 4 is a schematic flowchart of an example of a downlink control information transmission method according to this application.

S410: A terminal determines a quantity of information bits of first DCI based on a first BWP of a first cell, where the first DCI is carried on a PDCCH candidate of a second cell, and the first DCI is used to schedule data transmission of a third cell.

Correspondingly, a network device determines the quantity of information bits of the first DCI based on the first BWP of the first cell.

The first BWP is a 1st corresponding non-dormant BWP within active time, a 1st corresponding non-dormant BWP outside active time, or an active downlink BWP used before the first cell is deactivated. The first cell may be a secondary cell of the terminal, and the second cell may be a primary cell or a secondary cell of the terminal. It should be noted that the first cell is different from the second cell. That is, when both the first cell and the second cell are secondary cells of the terminal, the two secondary cells are different secondary cells. The third cell may be the first cell or the second cell, or the third cell may alternatively be a cell other than the first cell and the second cell. A state of a cell, a state of a carrier, and a state of a BWP in this application are all for a specific terminal.

It should be noted that not all PDCCH candidates in the second cell are necessarily configured to carry the first DCI. In the second cell, at least one PDCCH candidate is configured to carry the first DCI. In other words, the PDCCH candidate in the second cell herein is a PDCCH candidate configured to carry the first DCI.

The 1st corresponding non-dormant BWP of the first cell within active time is a 1st non-dormant BWP used when an active downlink BWP of the first cell is switched from a dormant BWP to a non-dormant BWP, where DCI indicating that the active downlink BWP of the first cell is switched to the dormant BWP is received within the active time; or a format of DCI indicating that the active downlink BWP of the first cell is switched to the dormant BWP is DCI format 0_1 or DCI format 1_1.

The 1st corresponding non-dormant BWP of the first cell outside active time is a 1st non-dormant BWP used when an active downlink BWP of the first cell is switched from a dormant BWP to a non-dormant BWP, where DCI indicating that the active downlink BWP of the first cell is switched to the dormant BWP is received outside the active time; or a format of DCI indicating that the active downlink BWP of the first cell is switched to the dormant BWP is DCI format 2_6.

In this embodiment of this application, a manner in which the network device determines the quantity of information bits of the first DCI based on the first BWP of the first cell is the same as the manner in which the terminal determines the quantity of information bits of the first DCI based on the first BWP of the first cell.

S420: The terminal monitors the first DCI on the PDCCH candidate in the second cell based on the quantity of information bits of the first DCI.

Correspondingly, the network device sends the first DCI on the PDCCH candidate in the second cell based on the quantity of information bits of the first DCI.

That the terminal monitors DCI on a PDCCH candidate means that the terminal attempts to perform blind detection on a PDCCH on a time-frequency resource corresponding to the PDCCH candidate and performs decoding and CRC check based on a DCI size. If the check succeeds, it is considered that one piece of DCI is successfully received on the PDCCH candidate; or if the check fails, it is considered that no PDCCH is detected on the PDCCH candidate.

According to the solution disclosed in this application, when the primary cell (the second cell) and the secondary cell (the first cell) may schedule data transmission of the primary cell, and the secondary cell is deactivated or an active downlink BWP of the secondary cell is a dormant BWP, a rule for determining a size of DCI for scheduling data transmission of the primary cell in the primary cell is re-made. This helps accurately determine the size of the DCI, and improve information transmission performance.

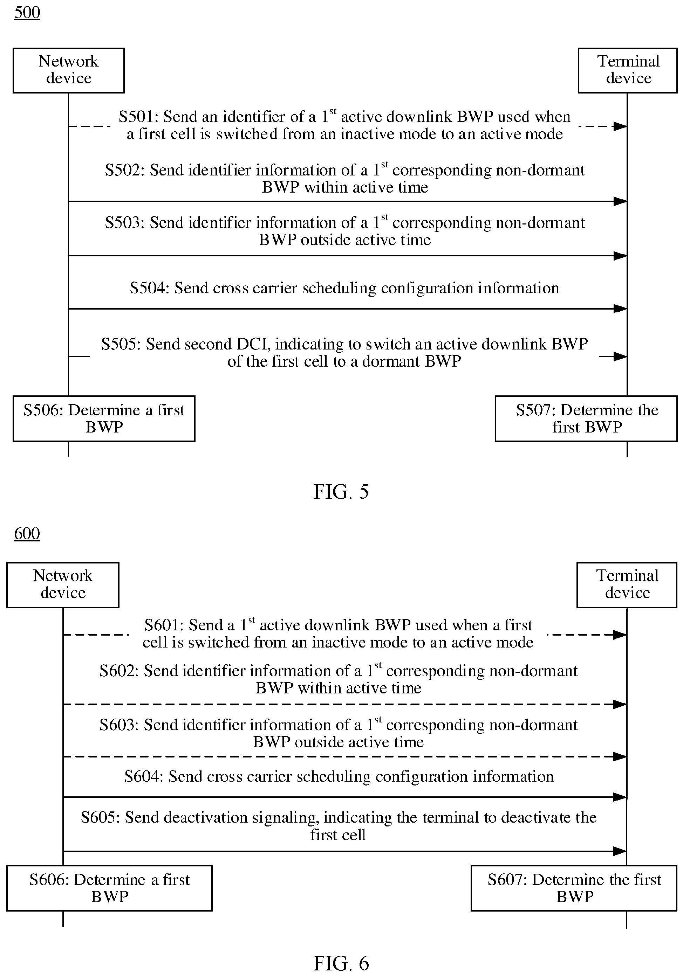

In this application, before S410 is performed, the network device and the terminal need to first determine the first BWP. A process in which the network device and the terminal determine the first BWP of the first cell may be classified into two different embodiments shown in FIG. 5 and FIG. 6 based on different states of the first cell.

In the embodiment shown in FIG. 5, an active BWP of the first cell is a dormant BWP, that is, the first cell is in a dormant mode. The network device and the terminal may separately determine the first BWP based on a DCI format or moments at which DCI indicating that the first cell enters the dormant mode is sent and received, and based on whether a 1st active downlink BWP used when the first cell switches from an inactive mode to an active mode is configured for the terminal. In an example, a specific processing process is as follows:

S501: Optionally, the network device sends, to the terminal, an identifier of the 1st active downlink BWP used when the first cell is switched from the inactive mode to the active mode.

Correspondingly, the terminal receives the identifier of the 1st active downlink BWP used when the first cell is switched from the inactive mode to the active mode. The identifier may be a firstActiveDownlinkBWP-Id information element in RRC signaling, and the identifier indicates the 1st active downlink BWP used when the first cell is switched from the inactive mode to the active mode. Optionally, the network device may further send, to the terminal, an identifier of a 1st active uplink BWP used when the first cell is switched from the inactive mode to the active mode, and the terminal may further receive the identifier of the 1st active uplink BWP used when the first cell is switched from the inactive mode to the active mode. The identifier may be a firstActiveUplinkBWP-Id information element in RRC signaling, and the identifier indicates the 1st active uplink BWP used when the first cell is switched from the inactive mode to the active mode.

S502: The network device sends an identifier of a 1st corresponding non-dormant BWP within active time to the terminal, where the identifier may be a firstWithinActiveTimeBWP-Id information element in RRC signaling. Correspondingly, the terminal receives the identifier of the 1st corresponding non-dormant BWP within active time.

S503: The network device sends an identifier of a 1st corresponding non-dormant BWP outside active time to the terminal, where the identifier may be a firstOutsideActiveTimeBWP-Id information element in RRC signaling. Correspondingly, the terminal receives the identifier of the 1st corresponding non-dormant BWP outside active time.

S504: The network device sends cross carrier scheduling configuration information to the terminal. Correspondingly, the terminal receives the cross carrier scheduling configuration information.

Specifically, the cross carrier scheduling configuration information indicates the terminal to monitor PDCCH candidates in the first cell and a second cell. The PDCCH candidate in the first cell carries third DCI, the PDCCH candidate in the second cell carries first DCI, and the first DCI and the third DCI are used to schedule data transmission of a third cell. In other words, the cross carrier scheduling configuration information indicates the terminal to monitor the third DCI in the first cell and monitor the first DCI in the second cell.

It should be understood that firstActiveDownlinkBWP-Id, firstActiveUplinkBWP-Id, firstWithinActiveTimeBWP-Id, firstOutsideActiveTimeBWP-Id, and the carrier scheduling configuration information may be carried in different messages or signaling, or may be partially carried in a same message or same signaling, or may be all carried in a same message or same signaling (in this case, steps S501, S502, S503, and S504 are a same step). This is not limited in this application.

S505: The network device sends second DCI to the terminal, to indicate to switch an active downlink BWP of the first cell to a dormant BWP.

Correspondingly, the terminal receives the second DCI, and after receiving the second DCI, switches the active downlink BWP of the first cell to the dormant BWP based on the second DCI, that is, switches the first cell to the dormant mode.

Specifically, before S505, the network device may obtain or determine identifier information of the dormant BWP (that is, dormantBWP-Id), and send the identifier information of the dormant BWP to the terminal by using RRC signaling. The network device and the terminal need to determine a quantity of information bits of the first DCI based on the first BWP, and the first BWP may be the 1st corresponding non-dormant BWP within active time, the 1st corresponding non-dormant BWP outside active time. Therefore, the network device and the terminal need to determine the first BWP.

S506: The network device determines the first BWP.

S507: The terminal determines the first BWP.

Specifically, there may be the following five manners:

Manner 1:

If the 1st active downlink BWP used when the first cell is switched from the inactive mode to the active mode is not configured for the terminal, the first BWP is an active downlink BWP used before the first cell is deactivated.

That the 1st active downlink BWP used when the first cell is switched from the inactive mode to the active mode is not configured for the terminal may be understood as that the network device does not configure, for the terminal from beginning to end, the 1st active downlink BWP used when the first cell is switched from the inactive mode to the active mode; or the network device configures, for the terminal by using a firstActiveDownlinkBWP-Id information element, the 1st active downlink BWP used when the first cell is switched from the inactive mode to the active mode, but subsequently releases the 1st active downlink BWP.

Manner 2: If a sending moment of the second DCI is within active time, the first BWP is the 1st corresponding non-dormant BWP within active time.

Within active time means within active time in a C-DRX mode, or in a non-C-DRX mode. It should be understood that in this embodiment of this application, the moment at which the network device sends the second DCI and a moment at which the terminal receives the second DCI are a same moment, or the moment at which the network device sends the second DCI and a moment at which the terminal receives the second DCI are in a same time period (because an air interface transmission delay may exist).

Manner 3: If a sending moment of the second DCI is outside active time, the first BWP is the 1st corresponding non-dormant BWP outside active time.

Manner 4: If a format of the second DCI is DCI format 0_1 or DCI format 1_1, the first BWP is the 1st corresponding non-dormant BWP within active time.

Manner 5: If a format of the second DCI is DCI format 2_6, the first BWP is the 1st corresponding non-dormant BWP outside active time.

In the embodiment shown in FIG. 6, the first cell is in an inactive mode. The network device and the terminal may separately determine the first BWP based on whether a 1st active downlink BWP used when the first cell is switched from the inactive mode to an active mode, whether the 1st active downlink BWP used when the first cell is switched from the inactive mode to the active mode is a dormant BWP, or whether a 1st corresponding non-dormant BWP within active time is configured for the terminal.

S601 is the same as S501, and details are not described herein again.

Content of S602 is the same as that of S502, and a difference lies in that in the embodiment shown in FIG. 6, S602 is an optional step.

Content of S603 is the same as that of S503, and a difference lies in that in the embodiment shown in FIG. 6, S603 is an optional step.

S604 is the same as S504, and details are not described herein again.

S605: The network device sends deactivation signaling to the terminal, to indicate the terminal to deactivate the first cell.

S606: The network device determines the first BWP.

S607: The terminal determines the first BWP.

Specifically, there may be the following four manners:

Manner 6:

If the 1st active downlink BWP used when the first cell is switched from the inactive mode to the active mode is not configured for the terminal, the first BWP is an active downlink BWP used before the first cell is deactivated.

That the 1st active downlink BWP used when the first cell is switched from the inactive mode to the active mode is not configured for the terminal may be understood as that the network device does not configure, for the terminal from beginning to end, the 1st active downlink BWP used when the first cell is switched from the inactive mode to the active mode; or the network device configures, for the terminal by using a firstActiveDownlinkBWP-Id information element, the 1st active downlink BWP used when the first cell is switched from the inactive mode to the active mode, but subsequently releases the 1st active downlink BWP.

Manner 7:

If the 1st active downlink BWP used when the first cell is switched from the inactive mode to the active mode is configured for the terminal, and the 1st active downlink BWP used when the first cell is switched from the inactive mode to the active mode is not a dormant BWP, the first BWP is the 1st active downlink BWP used when the first cell is switched from the inactive mode to the active mode.

Specifically, before S605, the network device may obtain or determine identifier information of the dormant BWP (that is, dormantBWP-Id), and send the identifier information of the dormant BWP to the terminal by using RRC signaling. Optionally, to reduce signaling overheads, dormantBWP-Id and firstWithinActiveTimeBWP-Id and/or firstOutsideActive-TimeBWP-Id may be carried in a same message or same signaling. In this case, the network device and the terminal further determine that firstActiveDownlinkBWP-Id is not equivalent to dormantBWP-Id.

Manner 8:

If the 1st active downlink BWP used when the first cell is switched from the inactive mode to the active mode is configured for the terminal, but the 1st active downlink BWP used when the first cell is switched from the inactive mode to the active mode is a dormant BWP, and the 1st corresponding non-dormant BWP within active time is configured for the terminal, the first BWP is the 1st corresponding non-dormant BWP within active time.

In this manner, after determining that S601 and S602 have been performed, the network device and the terminal directly determine, without performing any determining, that the first BWP is the 1st corresponding non-dormant BWP within active time. This is simple and efficient, and reduces computing power consumption.

Manner 9:

If the 1st corresponding non-dormant BWP within active time is not configured for the terminal, but the 1st corresponding non-dormant BWP outside active time is configured for the terminal, the first BWP is the 1st corresponding non-dormant BWP outside active time.

In this way, after the first BWP is determined by using the method (including the manner 1 to the manner 5) shown in FIG. 5 and the method (including the manner 6 to the manner 9) shown in FIG. 6, the network device and the terminal may continue to perform S410 and S420 shown in FIG. 4.

According to the solution disclosed in this application, when the primary cell (the second cell) and the secondary cell (the first cell) may schedule data transmission of the primary cell, and the secondary cell is deactivated or an active downlink BWP of the secondary cell is a dormant BWP, a rule for determining a size of DCI for scheduling data transmission of the primary cell in the primary cell is re-made. This helps accurately determine the size of the DCI, and improve information transmission performance.

It may be understood that, to implement the functions in the foregoing embodiments, the network device and the terminal include corresponding hardware structures and/or software modules for performing each function. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

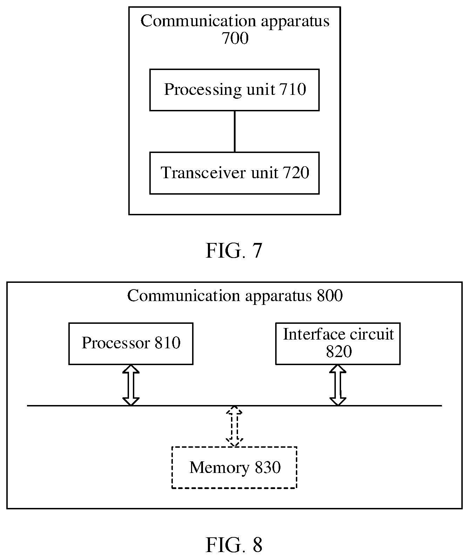

FIG. 7 and FIG. 8 are diagrams of possible structures of communication apparatuses according to embodiments of this application. These communication apparatuses may be configured to implement functions of the terminal or the network device in the foregoing method embodiments, and therefore can also implement beneficial effects of the foregoing method embodiments. In embodiments of this application, the communication apparatus may be one of the terminal devices 102 to 104 shown in FIG. 1, or may be the network device 101 shown in FIG. 1, or may be a module (for example, a chip) used in the terminal or the network device.

As shown in FIG. 7, a communication apparatus 700 includes a processing unit 710 and a transceiver unit 720. The communication apparatus 700 is configured to implement functions of the terminal or the network device in the method embodiments shown in FIG. 4 to FIG. 6.

When the communication apparatus 700 is configured to implement the function of the terminal in the method embodiment shown in FIG. 4, the processing unit 710 is configured to determine a quantity of information bits of first downlink control information DCI based on a first bandwidth part BWP of a first cell; and the transceiver unit 720 is configured to monitor the first DCI on a PDCCH candidate in a second cell based on the quantity of information bits of the first DCI.

Optionally, the transceiver unit 720 is further configured to receive second DCI, and the processing unit 710 is further configured to switch an active downlink BWP of the first cell to a dormant BWP based on the second DCI.

Optionally, the transceiver unit 720 is further configured to receive cross carrier scheduling configuration information.

When the communication apparatus 700 is configured to implement the function of the network device in the method embodiment shown in FIG. 4, the processing unit 710 is configured to determine a quantity of information bits of first downlink control information DCI based on a first bandwidth part BWP of a first cell; and the transceiver unit 720 is configured to send the first DCI on a PDCCH candidate in a second cell.

Optionally, the transceiver unit 720 is further configured to send second DCI, to indicate the terminal to switch an active downlink BWP of the first cell to a dormant BWP.

Optionally, the transceiver unit 720 is further configured to send cross carrier scheduling configuration information.

For more detailed descriptions of the processing unit 710 and the transceiver unit 720, refer to related descriptions in the method embodiment shown in FIG. 4.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to store instructions to be executed by the processor 810, store input data required for running the instructions by the processor 810, or store data generated after the processor 810 runs the instructions.

When the communication apparatus 800 is configured to implement the method shown in FIG. 4, the processor 810 is configured to implement the function of the processing unit 710, and the interface circuit 820 is configured to implement the function of the transceiver unit 720.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a network device to the terminal. Alternatively, the chip in the terminal sends information to another module (for example, the radio frequency module or the antenna) in the terminal, where the information is sent by the terminal to the network device.

When the communication apparatus is a module used in a network device, the module in the network device implements functions of the network device in the foregoing method embodiments. The module in the network device receives information from another module (for example, a radio frequency module or an antenna) in the network device, where the information is sent by a terminal to the network device. Alternatively, the module in the network device sends information to another module (for example, the radio frequency module or the antenna) in the network device, where the information is sent by the network device to the terminal. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or any regular processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. The processor and the storage medium may alternatively exist in the network device or the terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A downlink control information transmission method, comprising:

   determining a quantity of information bits of first downlink control information DCI based on a first bandwidth part BWP of a first cell, wherein the first BWP is a $1^{st}$ corresponding non-dormant BWP within active time or a $1^{st}$ corresponding non-dormant BWP outside active time, the first DCI is carried on a physical downlink control channel PDCCH candidate in a second cell, the first DCI is used to schedule data transmission of a third cell, the first cell is a secondary cell, the second cell is a primary cell or a secondary cell, and the first cell is different from the second cell; and
monitoring the first DCI on the PDCCH candidate in the second cell based on the quantity of information bits of the first DCI.

2. The method according to claim 1, wherein before the monitoring the first DCI, the method further comprises:

receiving second DCI; and
switching an active downlink BWP of the first cell to a dormant BWP based on the second DCI, wherein
when the second DCI is received within active time, the first BWP is the 1st corresponding non-dormant BWP within active time; or
when the second DCI is received outside active time, the first BWP is the 1st corresponding non-dormant BWP outside active time.

3. The method according to claim 1, wherein before the monitoring the first DCI, the method further comprises:

receiving second DCI; and
switching an active downlink BWP of the first cell to a dormant BWP based on the second DCI, wherein
when a format of the second DCI is DCI format 0_1 or DCI format 1_1, the first BWP is the 1st corresponding non-dormant BWP within active time; or
when a format of the second DCI is DCI format 2_6, the first BWP is the 1st corresponding non-dormant BWP outside active time.

4. The method according to claim 1, wherein when the first cell is deactivated, and a 1st active downlink BWP that is configured by a network device for a terminal device and that is used when the first cell is switched from an inactive mode to an active mode is a dormant BWP, the first BWP is the 1st corresponding non-dormant BWP within active time.

5. The method according to claim 1, wherein

when the first cell is deactivated, a 1st active downlink BWP that is configured by a network device for a terminal device and that is used when the first cell is switched from an inactive mode to an active mode is a dormant BWP, and the 1st corresponding non-dormant BWP within active time is not configured for the terminal device, the first BWP is the 1st corresponding non-dormant BWP outside active time; or
when the first cell is deactivated, a 1st active downlink BWP that is configured by a network device for a terminal device and that is used when the first cell is switched from an inactive mode to an active mode is a dormant BWP, and the 1st corresponding non-dormant BWP within active time is configured for the terminal device, the first BWP is the 1st corresponding non-dormant BWP within active time.

6. The method according to any one of claims 1 to 5, wherein the 1st corresponding non-dormant BWP of the first cell within active time is at least one of the following:

a 1st non-dormant BWP used when the active downlink BWP of the first cell is switched from a dormant BWP to a non-dormant BWP, wherein DCI indicating that the active downlink BWP of the first cell is switched to the dormant BWP is received within the active time; or
a 1st non-dormant BWP used when the active downlink BWP of the first cell is switched from a dormant BWP to a non-dormant BWP, wherein a format of DCI indicating that the active downlink BWP of the first cell is switched to the dormant BWP is DCI format 0_1 or DCI format 1_1.

7. The method according to any one of claims 1 to 6, wherein the 1st corresponding non-dormant BWP of the first cell outside active time is at least one of the following:

a 1st non-dormant BWP used when the active downlink BWP of the first cell is switched from a dormant BWP to a non-dormant BWP, wherein DCI indicating that the active downlink BWP of the first cell is switched to the dormant BWP is received outside the active time; or
a 1st non-dormant BWP used when the active downlink BWP of the first cell is switched from a dormant BWP to a non-dormant BWP, wherein a format of DCI indicating that the active downlink BWP of the first cell is switched to the dormant BWP is DCI format 2_6.

8. The method according to any one of claims 1 to 7, wherein before the monitoring the first DCI, the method further comprises:

receiving cross carrier scheduling configuration information, wherein the cross carrier scheduling configuration information indicates the terminal device to monitor PDCCH candidates in the first cell and the second cell, the PDCCH candidate in the first cell carries third DCI, the PDCCH candidate in the second cell carries the first DCI, and the third DCI is used to schedule data transmission of the third cell.

9. The method according to any one of claims 1 to 8, wherein the 1st corresponding non-dormant BWP of the first cell within active time is the 1st non-dormant BWP used when the active downlink BWP of the first cell is switched from the dormant BWP to the non-dormant BWP, and the DCI indicating that the active downlink BWP of the first cell is switched to the dormant BWP is received in an active time period in a non-connected mode discontinuous reception C-DRX mode or a C-DRX mode of the first cell.

10. The method according to any one of claims 1 to 9, wherein the 1st corresponding non-dormant BWP of the first cell outside active time is the 1st non-dormant BWP used when the active downlink BWP of the first cell is switched from the dormant BWP to the non-dormant BWP, and the DCI indicating that the active downlink BWP of the first cell is switched to the dormant BWP is received in a non-active time period in the C-DRX mode of the first cell.

11. The method according to any one of claims 1 to 10, wherein the third cell is the second cell.

12. A downlink control information transmission method, comprising:

determining a quantity of information bits of first downlink control information DCI based on a first bandwidth part BWP of a first cell, wherein the first BWP is a 1st corresponding non-dormant BWP within active time or a 1st corresponding non-dormant BWP outside active time, the first DCI is carried on a physical downlink control channel PDCCH candidate in a second cell, the first DCI is used to schedule data transmission of a third cell, the first cell is a secondary cell, the second cell is a primary cell or a secondary cell, and the first cell is different from the second cell; and
sending the first DCI on the PDCCH candidate in the second cell.

13. The method according to claim 12, wherein before the sending the first DCI, the method further comprises:

sending second DCI, wherein the second DCI indicates a terminal device to switch an active downlink BWP of the first cell to a dormant BWP, and
when the second DCI is sent within active time, the first BWP is the 1st corresponding non-dormant BWP within active time; or
when the second DCI is sent outside active time, the first BWP is the 1st corresponding non-dormant BWP outside active time.

14. The method according to claim 12, wherein before the sending the first DCI, the method further comprises:

sending second DCI, wherein the second DCI indicates a terminal device to switch an active downlink BWP of the first cell to a dormant BWP, and
when a format of the second DCI is DCI format 0_1 or DCI format 1_1, the first BWP is the 1st corresponding non-dormant BWP within active time; or
when a format of the second DCI is DCI format 2_6, the first BWP is the 1st corresponding non-dormant BWP outside active time.

15. The method according to claim 12, wherein when the first cell is deactivated, and a 1st active downlink BWP that is configured by a network device for a terminal device and that is used when the first cell is switched from an inactive mode to an active mode is a dormant BWP, the first BWP is the 1st corresponding non-dormant BWP within active time.

16. The method according to claim 12, wherein

when the first cell is deactivated, a 1st active downlink BWP that is configured by a network device for a terminal device and that is used when the first cell is switched from an inactive mode to an active mode is a dormant BWP, and the network device does not configure the 1st corresponding non-dormant BWP within active time for the terminal device, the first BWP is the 1st corresponding non-dormant BWP outside active time; or
when the first cell is deactivated, a 1st active downlink BWP that is configured by a network device for a terminal device and that is used when the first cell is switched from an inactive mode to an active mode is a dormant BWP, and the network device configures the 1st corresponding non-dormant BWP within active time for the terminal device, the first BWP is the 1st corresponding non-dormant BWP within active time.

17. The method according to any one of claims 12 to 16, wherein the 1st corresponding non-dormant BWP of the first cell within active time is at least one of the following:

a 1st non-dormant BWP used when the active downlink BWP of the first cell is switched from a dormant BWP to a non-dormant BWP, wherein DCI indicating that the active downlink BWP of the first cell is switched to the dormant BWP is sent within active time; or
a 1st non-dormant BWP used when the active downlink BWP of the first cell is switched from a dormant BWP to a non-dormant BWP, wherein a format of DCI indicating that the active downlink BWP of the first cell is switched to the dormant BWP is DCI format 0_1 or DCI format 1_1.

18. The method according to any one of claims 12 to 17, wherein the 1st corresponding non-dormant BWP of the first cell outside active time is at least one of the following:

a 1st non-dormant BWP used when the active downlink BWP of the first cell is switched from a dormant BWP to a non-dormant BWP, wherein DCI indicating that the active downlink BWP of the first cell is switched to the dormant BWP is sent outside active time; or
a 1st non-dormant BWP used when the active downlink BWP of the first cell is switched from a dormant BWP to a non-dormant BWP, wherein a format of DCI indicating that the active downlink BWP of the first cell is switched to the dormant BWP is DCI format 2_6.

19. The method according to any one of claims 12 to 18, wherein before the sending the first DCI, the method further comprises:
sending cross carrier scheduling configuration information, wherein the cross carrier scheduling configuration information indicates the terminal device to monitor PDCCH candidates in the first cell and the second cell, the PDCCH candidate in the first cell carries third DCI, the PDCCH candidate in the second cell carries the first DCI, and the third DCI is used to schedule data transmission of the third cell.

20. The method according to any one of claims 12 to 19, wherein the 1st corresponding non-dormant BWP of the first cell within active time is the 1st non-dormant BWP used when the active downlink BWP of the first cell is switched from the dormant BWP to the non-dormant BWP, and the DCI indicating that the active downlink BWP of the first cell is switched to the dormant BWP is received in an active time period in a non-connected mode discontinuous reception C-DRX mode or a C-DRX mode of the first cell.

21. The method according to any one of claims 12 to 20, wherein the 1st corresponding non-dormant BWP of the first cell outside active time is the 1st non-dormant BWP used when the active downlink BWP of the first cell is switched from the dormant BWP to the non-dormant BWP, and the DCI indicating that the active downlink BWP of the first cell is switched to the dormant BWP is received in a non-active time period in the C-DRX mode of the first cell.

22. The method according to any one of claims 12 to 21, wherein the third cell is the second cell.

23. A communication apparatus, comprising:

a memory, configured to store computer instructions; and
a processor, configured to execute the computer instructions stored in the memory, to enable the communication apparatus to perform the method according to any one of claims 1 to 11, or
to enable the communication apparatus to perform the method according to any one of claims 12 to 22.

24. A communication apparatus, comprising a module configured to perform the method according to any one of claims 1 to 11 or comprising a module configured to perform the method according to any one of claims 12 to 22.

25. A computer program, comprising computer instructions, wherein when the computer instructions are executed by a communication apparatus, the communication apparatus is enabled to implement the method according to any one of claims 1 to 11 or implement the method according to any one of claims 12 to 22.

26. A computer-readable storage medium, storing a computer program, wherein when the computer program is executed by a communication apparatus, the method according to any one of claims 1 to 22 is performed.

Communication system 100

FIG. 1

200

DRX cycle

Within active time | Outside active time

PDCCH monitoring
occasion

FIG. 2

300

One frame

One subframe

UE monitors a PDCCH

Active time

Non-active time

Start offset

DRX cycle

Slot offset

FIG. 3

400

| Network device | | Terminal device |

S410: Determine a quantity of information bits of first DCI based on a first BWP of a first cell, where the first DCI is carried on a PDCCH candidate in a second cell, and the first DCI is used to schedule data transmission of a third cell

S420: Monitor the first DCI on the PDCCH candidate in the second cell based on the quantity of information bits of the first DCI

FIG. 4

500

```
┌──────────┐                                                                        ┌──────────┐
│ Network  │                                                                        │ Terminal │
│ device   │                                                                        │ device   │
└──────────┘                                                                        └──────────┘
     │                                                                                    │
     ┆ ─ ─ ─  S501: Send an identifier of a 1ˢᵗ active downlink BWP used when  ─ ─ ─▶│
     │        a first cell is switched from an inactive mode to an active mode           │
     │                                                                                    │
     │        S502: Send identifier information of a 1ˢᵗ corresponding non-dormant        │
     │                         BWP within active time                                     │
     │──────────────────────────────────────────────────────────────────────────────▶│
     │                                                                                    │
     │        S503: Send identifier information of a 1ˢᵗ corresponding non-dormant        │
     │                         BWP outside active time                                    │
     │──────────────────────────────────────────────────────────────────────────────▶│
     │                                                                                    │
     │           S504: Send cross carrier scheduling configuration information            │
     │──────────────────────────────────────────────────────────────────────────────▶│
     │                                                                                    │
     ┆ ─      S505: Send second DCI, indicating to switch an active downlink BWP          │
     │                       of the first cell to a dormant BWP                      ─▶│
     │                                                                                    │
```

| S506: Determine a first BWP | | S507: Determine the first BWP |

## FIG. 5

600

```
┌──────────┐                                                                        ┌──────────┐
│ Network  │                                                                        │ Terminal │
│ device   │                                                                        │ device   │
└──────────┘                                                                        └──────────┘
     │                                                                                    │
     ┆ ─ ─ ─ ─  S601: Send a 1ˢᵗ active downlink BWP used when a first  ─ ─ ─ ─▶│
     │          cell is switched from an inactive mode to an active mode                  │
     │                                                                                    │
     │         S602: Send identifier information of a 1ˢᵗ corresponding non-dormant       │
     │                          BWP within active time                                    │
     ┆ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─▶│
     │                                                                                    │
     │         S603: Send identifier information of a 1ˢᵗ corresponding non-dormant       │
     │                          BWP outside active time                                   │
     ┆ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─▶│
     │                                                                                    │
     │           S604: Send cross carrier scheduling configuration information            │
     │──────────────────────────────────────────────────────────────────────────────▶│
     │                                                                                    │
     │      S605: Send deactivation signaling, indicating the terminal to deactivate the  │
     │                               first cell                                           │
     │──────────────────────────────────────────────────────────────────────────────▶│
     │                                                                                    │
```

| S606: Determine a first BWP | | S607: Determine the first BWP |

## FIG. 6

Communication apparatus
700

Processing unit 710

Transceiver unit 720

FIG. 7

Communication apparatus 800

Processor 810

Interface circuit
820

Memory 830

FIG. 8

## INTERNATIONAL SEARCH REPORT

| International application No. |
| --- |
| **PCT/CN2023/120044** |

| A. | CLASSIFICATION OF SUBJECT MATTER |
| --- | --- |

H04W 72/232(2023.01)i

According to International Patent Classification (IPC) or to both national classification and IPC

| B. | FIELDS SEARCHED |
| --- | --- |

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

3GPP, VEN, DWPI, ENTXT, CNTXT, ENTXTC: 比特, 大小, 带宽, 多少, 非休眠, 辅小区, 主小区, 辅助小区, 激活, 跨载波, 去激活, 数量, 数目, 下行控制信息, 下行链路控制信息, 休眠, bit, PDCCH, BWP, DCI, non, number, SCell, PCell, active, size, dorman??

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2020313833 A1 (YI, Yunjung et al.) 01 October 2020 (2020-10-01) description, paragraphs [0343]-[0409] and [0438]-[0538] | 1-26 |
| A | US 2022046662 A1 (QUALCOMM INCORPORATED) 10 February 2022 (2022-02-10) entire document | 1-26 |
| A | WO 2022151418 A1 (HUAWEI TECHNOLOGIES CO., LTD.) 21 July 2022 (2022-07-21) entire document | 1-26 |
| A | SAMSUNG. "Remaining issues for support of efficient and low latency serving cell configuration/activation/setup" *3GPP TSG RAN WG1 #100-e R1-2000645*, 06 March 2020 (2020-03-06), entire document | 1-26 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 November 2023** | **29 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2023/120044**

| Patent document cited in search report | | | Publication date (day/month/year) | Patent family member(s) | | | Publication date (day/month/year) |
|---|---|---|---|---|---|---|---|
| US | 2020313833 | A1 | 01 October 2020 | EP | 3716698 | A1 | 30 September 2020 |
| US | 2022046662 | A1 | 10 February 2022 | WO | 2022032272 | A1 | 10 February 2022 |
| | | | | EP | 4193552 | A1 | 14 June 2023 |
| | | | | CN | 116137950 | A | 19 May 2023 |
| | | | | IN | 202247074860 | A | 30 December 2022 |
| WO | 2022151418 | A1 | 21 July 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211230567